Europäisches Patentamt

European Patent Office

Office européen des brevets

(11) Publication number: **0 322 375**
**A2**

## EUROPEAN PATENT APPLICATION

(21) Application number: 88830545.5

(22) Date of filing: 20.12.88

(51) Int. Cl.⁴: **G 01 H 3/14**

(30) Priority: 23.12.87 IT 4874487

(43) Date of publication of application:
28.06.89 Bulletin 89/26

(84) Designated Contracting States:
AT BE CH DE ES FR GB GR LI LU NL SE

(71) Applicant: **CONSIGLIO NAZIONALE DELLE RICERCHE**
**Piazzale Aldo Moro, 7**
**I-00100 Roma (IT)**

(72) Inventor: **Cannelli, Giovanni Bosco**
**Via Trebio Littore 5**
**I-00152 Roma (IT)**

**Santoboni, Silvio**
**Via Nomentana 905**
**I-00137 Roma (IT)**

(74) Representative: **Fiammenghi-Domenighetti, Delfina et al**
**Fiammenghi-Fiammenghi Via Quattro Fontane 31**
**I-00184 Roma (IT)**

The title of the invention has been amended (Guidelines for Examination in the EPO, A-III, 7.3).

(54) **Method and micro-processor-based apparatus for measuring environmental noise pollution.**

(57) This invention relates to a method and a microprocessor-based apparatus for directly measuring the noise using a nuisance index ($L_{DI}$) bound to two physical parameters of the noise: the average energy level ($L_E$) and the fluctuation level of the noise.

The apparatus is comprised of a microphone (M) connected to a pre-amplifier (1) and a detecting unit (2) controlling an analogical-to-digital converter (3) associated to a time (4) feeding a signal to a digital filter (5) and at the same time to one input of a comparator (6). The filter (5) feeds the filtered signal to an integrator (7) supplying the parameter ($L_E$) and simultaneously to the second input of comparator (6) which supplies the parameter ($L_\varphi$) through counter (8) associated to a trimmer (10). Parameters ($L_E$) and ($L_\varphi$) are indicated in block (9) of the display.

FIG.1

Description

## METHOD AND MICROPROCESSOR-BASED APPARATUS FOR DIRECTLY MEASURING A PARTICULAR INDEX FOR THE EVALUATION OF THE ENVIRONMENTAL NOISE POLLUTION.

This invention relates to a method and a microprocessor-based apparatus for directly measuring the noise using a particular nuisance index associated to two physical parameters of the noise, namely the average energy level of the noise and the noise fluctuation level. Two different aspects in the evaluation of the environmental noise are provided. The first one is objective and relates to the physical measurement of the noise, the second one is subjective and is bound to the difficulty of defining an appropriate nuisance index considering the reactions of people to the noise. While the physical measurement of the noise is currently carried out without excessive difficulty, the subjective aspect of the noise does not allow one definitive solution to be achieved. In order to provide a real evaluation of the nuisance caused by the noise, it should be taken into consideration besides the objective parameters of the noise as the intensity, the fluctuation, the level of the background noise, the characteristic of the single sound sources, also all factors of psycho-sociological nature and contingent character which can affect the response of the individual to the noise.

The noise parameter processing is effected almost by means of the physical data of the noise, the reliability of which is evaluated by calculating the statistical correlation factor between the objective noise data and the subjective response of people according to suitable evaluation criteria.

Presently several indices for the evaluation of the nuisance caused by the environmental noise are provided (Schultz, T.J. Community Noise Rating, Appl.Science, publ. Essex 1982). The calculation of said indices, however, can be somewhat laborious being founded on a preliminary statistical analysis of noise samples.

In addition, while it is current practice to measure the mean level of the noise, there is not jet a clearly and precisely defined procedure for the noise fluctuation measurement.

The index $L_{DI}$ (nuisance level of the noise) proposed by the present inventors some years ago (Cannelli G.B., Santoboni S., "Direct measurement of Noise Nuisance by the New Index $L_{DI}$, Applied Acoustics, 7, 47 (1974).) is correlated to two essential characters of the nuisance caused by the noise: the first one is bound to the sound intensity, the second one to the noise fluctuations. It can be directly measured by means of an analogical apparatus built by the same inventors (Cannelli G.B., Santoboni S., Apparatus for directly measuring the nuisance index $L_{DI}$, Technical Report No. 34, IDAC (CNR), 1975).

The above mentioned analogical apparatus, however, does not allow the measurement of index $L_{DI}$ to be effected by a single operation for a period of time greater than some tens of seconds due to problems caused by the drift of the analogical integrators.

The apparatus of this invention based upon a microprocessor allows the above cited inconvenient to be eliminated so that uninterrupted measurements from a few seconds to over 30 minutes can be effected assuring a further extension of the time pursuant to the improving of the digital technique. Such apparatus is generally based on the following known concept of "nuisance level $L_{DI}$" which has been already introduced by the same inventors.

It is defined by the following expression:

$$L_{DI} = L_E + L_\phi$$

$$L_E = 10 \log_{10} \frac{1}{T} \int_0^T 10^{L(t)/10} \, dt$$

$$L_\phi = K \frac{\tau}{T} \sum_{t=0}^{T} \frac{L_p(t) - \overline{L(t)}}{n}$$

where in the first expression $L_E$ indicates the "average energy level" of the noise and $L_\phi$ is the "noise fluctuation level". In both following expressions T is the measuring time of the acoustical event in seconds; L(t) is the instantaneous noise level; K is a constant correlated with the physical data of the noise and subjective tests of evaluation of the nuisance; $\tau$ is the prefixed time interval for the $L_\phi$ measurement which in the analogical apparatus was indicated as "sampling time"; $L_p(t)$ and L(t) are the noise levels relative to a small time constant (noise fluctuation) and a greater time constant (average noise level), respectively; $\underline{n}$ is a whole number depending upon the minimum dB-range of the noise fluctuation one wants to detect. The nuisance components $L_E$ as determined above is the time calculated average value of the noise intensity expressed in logaritmic scale. The component $L_\phi$ is the nuisance portion due to the noise fluctuations.

According to the present invention the index $L_{DI}$ is obtained by the following suitably modified expressions:

$$L_{DI} = L_E + L_\phi$$

$$L_E = 10 \lg_{10} \frac{1}{T} \int_O^T 10^{L(t)/10} dt$$

$$L_\phi = K \frac{T}{T} \sum_{x=0}^{x_T} \frac{f(x)}{n}$$

where:

$X = L_p(t) - \overline{L(t)}$, with $L_p(t)$ and $\overline{L(t)}$ defined as above;

$f(x) = 0 \quad x \leqq 0;$

$f(x) = L_p(t) - \overline{L(t)} \quad x > 0;$

$x_T$ is the value of the variable x at the time T.

The constant $\tau$ is provisionally reduced to unit in the digital apparatus.

Thus index $L_\phi$ accounts for the behaviour of the human ear under certain noise conditions. In particular the contribute to the nuisance is only due to the positive noise fluctuations with respect to the average value. Further the index $L_\phi$ accounts not only for the istantaneous noise fluctuations but also for the recent history of the noise as the nuisance sensation depends also on the temporary custom of the listener to the noise level immediately preceding the noise fluctuation.

The concepts expressed above can be exemplified considering the operation of the measuring apparatus of this invention in the following three limit conditions:

i) steady noise: $L_\phi$ does not give any contribution to the nuisance index which depends only upon the average noise intensity;

ii) quickly increasing noise intensity after a noise standstill: in such a case the differential value $L_p(t)$ $-\overline{L(t)}$ is strongly increased, thus resulting in a high value of $L_\phi$;

iii) quickly decreasing noise from a high value of noise intensity: this situation is similar to case ii) but in the reverse directin. $L_\phi$ does not give any contribution.

It is evident from the above that index $L_{DI}$ is a physical parameter approximating as much as possible a psycho-physiological aspect of the nuisance caused by the noise. It is in fact known that a fluctuating noise sensed after a long enough silence interval causes a nuisance sensation greater than that of a noise having fluctuations of the same magnitude and statistical distribution but sensed immediately after a background noise which is so loud as to considerably raise the threshold level of the human ear sensitivity.

The apparatus of this invention is comprised of a microphone feeding the received signal to a pre-amplifier which applies this signal to a RMS-detector provided with a small time constant. The output of said detector drives a 8-bit analogical-to-digital converter associated to a timer. The converter supplies the signal both to a digital filter acting as a RC-circuit having a long time constant and one input of a comparator.

Said filter feeds an output signal both to the other input of said comparator and an integrator which supplies the parameter $L_E$ to a display unit. Simultaneously the multiple threshold comparator feeds an output signal to suitable store registers associated to a timer and providing the parameter $L_\phi$ which is displayed by the aforesaid display unit.

These and other features and advantages of the invention will be better illustrated by the following description with reference to the annexed drawing, wherein:

Fig. 1 shows a block diagram of the apparatus according to the invention;

Fig. 2 shows the electrical diagram of the input pre-amplifier;

Fig. 3 shows the electrical diagram of the detector;

Fig. 4 shows the electrical diagram of the analogical/digital converter and the associated circuits;

Figs. 5 and 6 are flow charts of the second section of the apparatus, the first flow chart showing the steps of noise sample detection, the second flow chart showing the steps of digital signal processing.

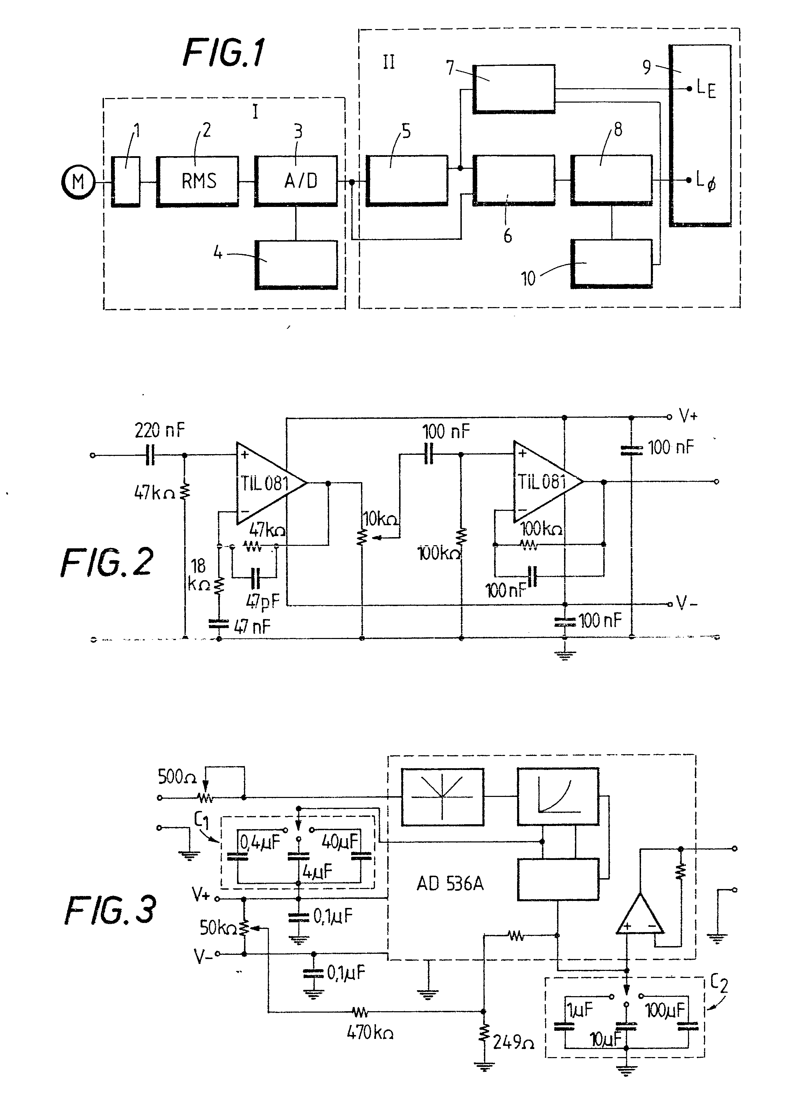

With reference to Fig. 1 it is generally indicated as M a noise receiving microphone which supplies an electrical signal to a pre-amplifier 1 feeding in turn its output signal to a RMS-detector 2 provided with a short time constant. The output signal of detector 2 drives a 8-bit analogical-to-digital converter 3 associated to a timer 4. The output signal of converter 3 is applied both to a digital filter 5 acting as a RC-circuit having a long time constant and to one input of comparator 6. The output signal of digital filter 5 is simultaneously applied to an integrator 7 which supplies the parameter $L_E$ both to block 9 and to a second input of multiple threshold comparator 6 which compares the two received signals and applies output signals to suitable store registers or counters indicated by block 8 associated to a timer 10 and providing the calculation of the parameter $L_\phi$

which is supplied to block 9, where said parameters can be separately stored as well as summed to achieve $L_{DI} = L_E + L_\varphi$.

In the block diagram of the apparatus shown in Fig. 1 the operating parts are divided in two basic sections indicated as I and II, respectively, and shown inside dashed frames. Section I is comprises of blocks 1, 2, 3 and 4 formed of properly designed electronic circuits providing a preliminary processing of the analogical signal and the requested analogical-to-digital conversion in order to successively carry out the digital signal processing. Blocks 5 to 10 of section II related to the digital signal processing and perform the logical functions providing the synthesis of the whole data processing and the displaying of final results as well. Briefly section II has been designed as an electronic system provided with a microprocessor card implementing a suitable software performing the desired logical functions.

A particularly has been devoted to the choose of CMOS technology devices which allow portable battery-powered apparatus to be provided due to low power consumption. As far as the functional description of the block diagram is concerned and still referring to Fig. 1 the signal from microphone M is properly amplified by block 1 and is fed to RMS-detector 2 provided with a short integration time constant $\tau_1$. The output signal of detector 2 is subjected to analogical-to-digital conversion by block 3 also performing the interfacing function of its output signal with block 5 of section II. The first section is also provided with block 4 which performs the clock function and synchronizes the sampling circuit and the interface of block 3. The 8-bit analogical-to-digital converter 3 is adapted to cover a dynamic of about 46 dB which is considered wide enough because the conversion is carried out after the filtering operation of block 2 having a time constant $\varepsilon_1$. The dynamic of the signal, therefore, is strongly reduced with respect to the input signal of the microphone. As a further consequence a very low sampling frequency can be used. If, for example, $\tau_1 = 10$ ms, which is an optimum value for measuring the swift noise fluctuations, the sampling frequency can be chosen somewhat higher than 200 Hz, which is the theoretical minimum value provided by the sampling theorem for the above mentioned value of $\tau_1$.

The digital signal is then processed by a digital filter (block 5) which is able to act as a RC-circuit having a high time constant. The output signal of the digital filter 5 is integrated by means of summing operations in a store register (block 7) so as to provide the component $L_E$ of the index $L_{DI}$. This component is then supplied to a display unit 9 providing a readout for the operator. The calculation of the component $L_\varphi$ is carried out by means of a comparator 6 and counters 8. The multiple threshold comparator 6 compare the two signals, i.e. the low time constant signal (which is the digital input signal of the digital filter 5) and the high time constant signal (which is the output signal of the digital filter 5). The thresholds of comparator 6 spaced from one another by 3 dB are four so as to cover a dynamic range of 12 dB. The output signals of comparator 6 (one for each threshold) are fed to as many counters 8. The total sum of the counting operation is then fed, except for a conversion factor, to the display unit 9 providing the desired component $L_\varphi$.

The programmable timer 10 determines the total time interval for the measurement.

The electrical diagrams of the above described blocks are now illustrated.

Fig. 2 shows the diagram of the input amplifier 1. It is formed of two operational amplifiers using input JFET TIL 081. The first amplifier is connected so as to have a voltage gain of about 10 dB and an input impedance of 47 kOhm.

The second operational amplifier, which is connected to the first stage over a trimming resistance to adjust the gain upon calibrating the apparatus, is used as impedance matching unit to provide a suitable coupling with RMS-detector 2 which requires as drive stage a low inner impedance generator. The gain of the amplifier needs a pre-amplified microphone M adapted to provide output voltages of about 1 $V_{eff}$.

As pre-amplified microphone M a sound level meter can be used by picking up the signal from its standard "AC" output.

The circuit diagram of the root mean square detector (block 2) is shown in Fig. 3. This function is performed by only one integrated circuit AD536A which is adapted to assure its operation for an useful input dynamic range of 60 dB with a precision better than one percent over 40 dB for signals having a crest factor up to 7.

In order to minimise the output voltage offset a trimmer is provided which is formed of a potentiometer of 50 kOhm and a voltage divider consisting of two resistance of 470 kOhm and 249 kOhm, respectively. A further input trimming resistance allows a precise adjustment of the scale factor which can be effected by the offset compensation network.

The capacitor set $C_1$ consists of three components with values of 0.4 $\mu F$, 4$\mu F$ and 40 $\mu F$ corresponding to 10 ms, 100 ms and 1 s, respectively.

Thus the circuit can be preset according to said time constants to measure fast, middle or slow noise fluctuations, respectively. This makes the apparatus of this invention particularly versatile as it accounts for noise measurement in a wide range of noise pollution situations. The capacitor set $C_2$ also consisting of three components with values of 1 $\mu F$, 10 $\mu F$ and 100 $\mu F$, respectively, allows the residual ripple to be reduced without impairing the settling time of RMS-detector 2. The value of $C_2$ is selected according to that of $C_1$ so that $C_2$ is equal to about $2C_1$.

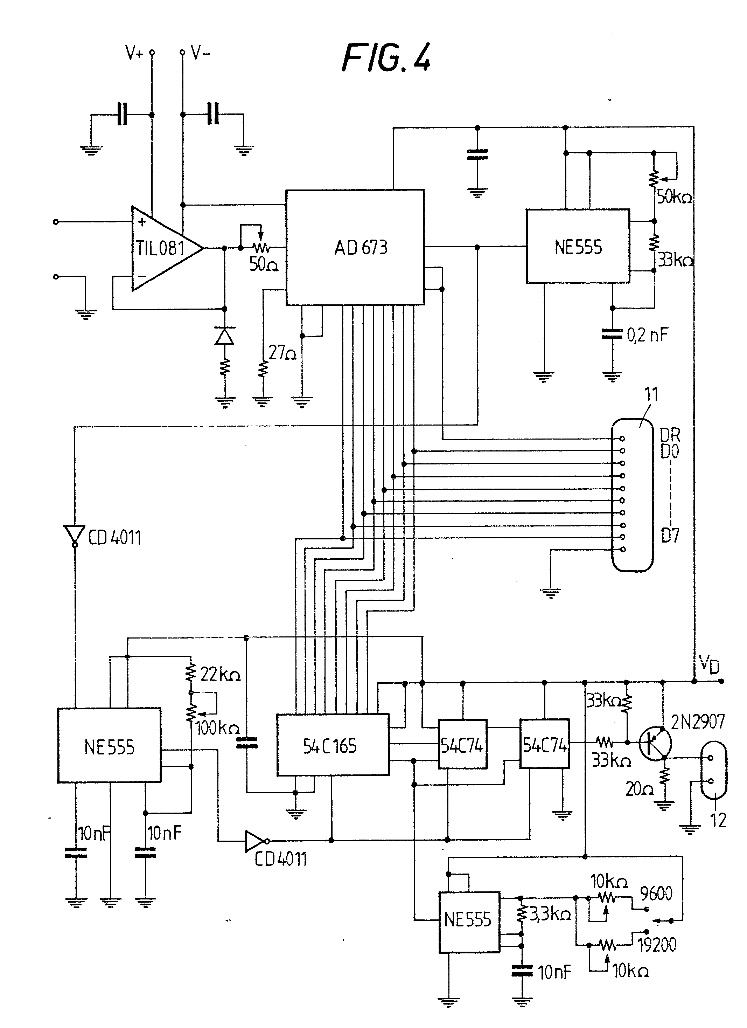

The output signal of the detector (block 2) is successively converted into digital form by the 8-bit A/D converter 3 (Fig. 4). Converter 3 consists of only one integrated circuit AD 673 including the basic typical functions of a device constructed according to the successive approximation technique: a comparator, a D/A converter and a shift register (SAR). As the input of converter 3 has a low impedance, an input matching unit formed of an operational amplifier TIL 081 is provided. It is also provided a full scale calibration by a trimming

4

resistance of 50 Ohm.

The A/D converter 3, even if with only 8 bit, has a sufficient input dynamic (about 46 dB) as its input signal is fed from a low-pass filter of RMS-detector 2. As the cutout frequency relative to such a filtering operation is 100 Hz, the minimum theoretical sampling frequency is 200 Hz, such a value being increased to 250 Hz for safety reasons. The conversion time of the device according to the manufacturer's specification is lower than or equal to 30 μs. As the conversion rate with respect to the low passing band of the analogical signal is high, a sample and hold circuit is not needed any longer, thus simplifying the whole system. The converter provides only one pulse control signal which establishes the beginning of each A/D conversion operation. The sampling frequency is established by the repeating frequency of the control pulse (block 3) generated by the integrated circuit NE 555. The digital signal is available directly in 8-bit parallel form at the output of the converter which is provided with an inside buffer and does not require any additional circuit for the interfacing with the outside. The parallel output is than simply connected to an output connector 11 along with a ninth bit, said connector being inserted into converter AD 673 providing the signal of end of conversion, i.e. "output data ready". The parallel interface allows the outer microprocessor to be directly connected provided that said microprocessor is provided in turn with a parallel interface. Moreover, in order to allow microprocessors provided with serial interface to be connected, there is also provided a parallel/serial protocol converter compatible with the standard interface RS 232. The circuit is simply comprised of a shift register 54C 165 and two fli-flops of D-type driven by suitable strobe signals and clock signals generated by auxiliary circuits formed of further two integrated circuit NE 555. A transistor 2N 2907 makes the logical voltage levels compatible with those of the standard interface RS 232. The use of a serial interface 12 is possible as the provided sampling frequency is low (250 Hz), thus allowing data transfer in real time also over this connection. However, as it is convenient using the maximum data transfer rate, the serial interface operates with at least 9600 baud, preferably it is provided a higher rate of 19200 baud to be used if the employed microprocessor can operate accordingly. The parallel interfacing, however, is the only one that allows the most operation in real time to be carried out by the microprocessor between samplings in succession. If the developed software provides operations of this type the use of a parallel interface becomes compulsory. The auxiliary circuits for the generation of the sampling frequency, the clock signal for the serial interface and the strobe signal provided by a monostable multivibrator from the sampling frequency are formed of simple oscillators which are not crystal-controlled as the requested precision and stability are not so high (about 1%). A final auxiliary circuit is the power supply. The voltages requested by the above described circuits are 5 volts and ± 15 volts. In order to use a battery of cells each having the same nominal voltage a simple serial regulation circuit has been used to obtain 5 volts directly from the 9 volts battery. Moreover a DC-DC converter has been used supplying the voltage ± 15 volts with a maximum load current of 20 mA from the 9 volts battery.

As far as section II of Fig. 1 and the software requested to implement the functions described in section II of the block diagram is concerned, instead of a particular language listing for a determined microprocessor system it is preferable to give a functional description of general utilization by means of flow charts, thus providing the general criteria to properly develop a software apart from the employed system. This further allows the increasing of the available memory as well as of the data processing rate of the central processing unit to be utilized in the best way, said capabilities being the main features which are more and more improved with the increase of the efficiency of the portable microprocessor systems. This is true in particular for the portable systems which still needs a considerable improvement with respect to the stationary systems, especially in terms of cost to efficiency ratio.

A first function of the microprocessor system relates to the acquisition of digital data from the analogical-to-digital converter 3. Such data are stored in the RAM of the microprocessor and this can be made according to two different strategies:

 i) if the used microprocessor is fast enough to carry out the subsequent filtering and comparing operations in real time, i.e. in the time interval between two sampling in succession, a small buffer in the RAM will be sufficient to store the incoming sample;

 ii) if the microprocessor does not allow data to be processed in real time it is firstly necessary to store the samples of the current measurement in a RAM and to perform the digital data processing at the end of the acquisition process.

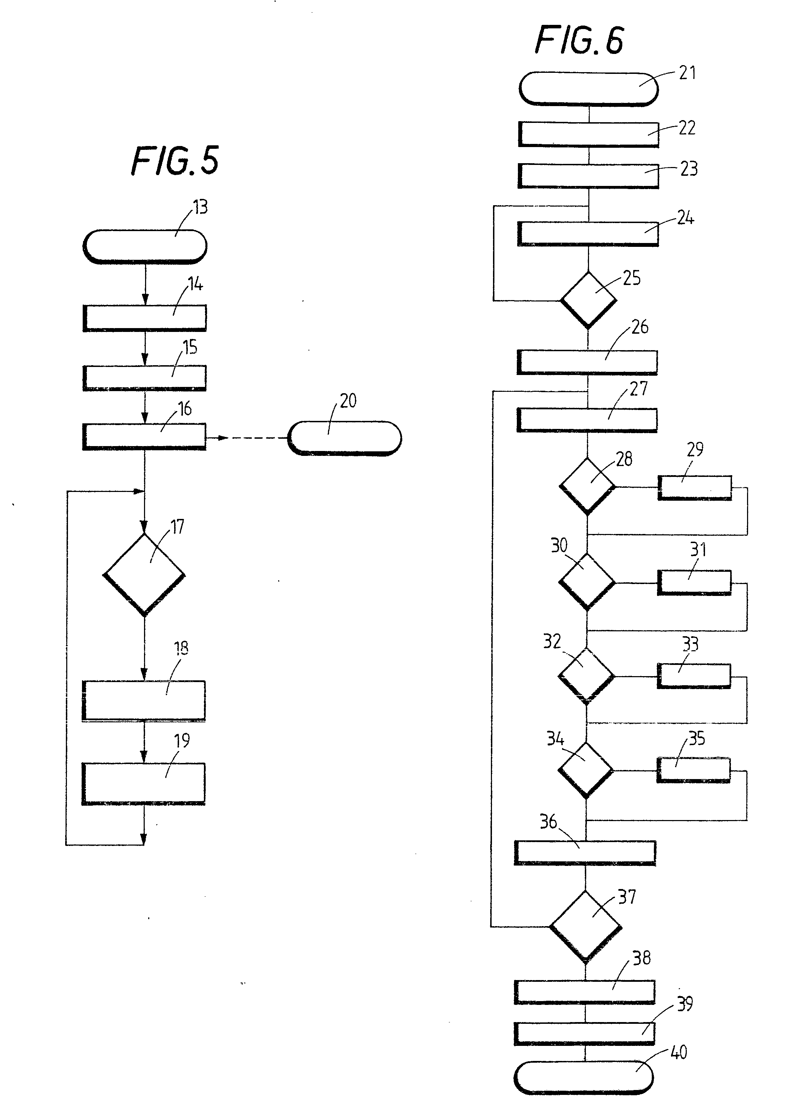

In the first case there is no limit for the maximum measurement time apart from that recommended by the practice. In the second case the maximum interval which can be provided for the measuring time generally depends upon the available RAM. As the samples are obtained with a generally low frequency, even if only 32 kbytes of RAM are available, the maximum interval for the measurement of the index $L_{DI}$, for example in case of time constant $\tau_1 = 10$ ms, is equal to $32,000/250 = 131$ seconds, i.e. one order greater than an equivalent analogical apparatus. The measurement time interval is in any case determined by a timer which can be constituted by the clock of the system suitably programmed by the control software. The clock generates interrupt signals which cause the central processing unit to stop the acquisition process. The "data ready" signal for the CPU to be received from A/D converter 3 can be generated either by polling techniques or by interrupt techniques, the latter being almost compulsory in case of data processing in real time. As a result the operations of the flow chart of Fig. 5 should be carried out. The subsequent data processing consists of the digital filtering to obtain an integrated signal according to the longer time constant, comparing the levels having a short time constant with the level having the long time constant and calculating $L_E$ and $L_\varphi$ by using suitable counting registers. The final value of $L_E$ al $L_\varphi$ is then fed to display 9 of the employed microprocessor.

The flow chart of Fig. 6 shows the logical sequence to be performed in order to carry out the above described operations. It should be noted that in the first time period of two seconds corresponding to the first 500 samples an initial value of the level relative to the long time constant is calculated without any calculation relative to $L_E$ and $L_\varphi$.

Referring now to the flow chart of Fig. 5 blocks 13 to 20 relative to the steps of said flow chart are illustrated:

Step 13 - start of operations;

Step 14 - initialization of pointer register to RAM sample storage;

Step 15 - parameter presetting of timer 10. The total measuring time in seconds is set;

Step 16 - start of the count-down of timer 10. At the end of the time interval set in step 15 an interrupt signal is generated which leads to the end of step 20. Before this event occurs, the program goes to the acquisition logical loop of steps 17, 18 an 19;

Step 17 - "data ready" test by A/D converter 3. If the condition is not true the program comes back to step 17, otherwise goes forward to step 18;

Step 18 - data at the output of A/D converter 3 is shifted to the RAM location pointed by the already present register;

Step 19 - the pointer registers is increased in such a way as to indicate the free location of the RAM for the next sample. The program comes then back to step 17;

Step 20 - end of the sample acquisition process.

Referring to the flow chart of Fig. 6, blocks 21 to 40 indicates the following steps;

Step 21 - start of digital sample processing;

Step 22 - variable and process pointer initialization: $L_\varphi$ = O. This variable will assume at the end of the process the final of $L_\varphi$;

$L_E$ = O. This variable will assume at the end of the process the final value of $L_E$;

POINT: RAM data pointer indicating at the start the first digital sample;

IRC = $-\frac{1}{fc} = -\frac{1}{250}$ : time interval between two consecutive samples (equal to the inverse of the sampling frequency 250 Hz);

SCAL = IRC; scale factor;

CMP = O: process variable;

NC = O: number of sample to be processed;

TAU = O: process variable;

SUM = O: process variable;

AK = EXP (-IRC): digital filter constant;

AH = -AK: digital filter constant;

NCP = time period in seconds x 250 = total number of sample;

A = 0,707

B = A*A Constants for the multiple treshold

C = A*B comparator (3 dB band)

D = A*C

Step 23 - NC = 500: counter presetting to 500 samples (2 seconds for a sampling frequency of 250 Hz);

Step 24 - digital filter 5 calculation for the first 500 samples: CMP = value pointed by POINT;

SUM = AH*CMP + AK*TAU

TAU = SUM

POINT = POINT + 1

NC = NC - 1

Step 25 - test of the condition NC = O. If the condition is true, the program goes forward to step 26, otherwise it comes back to step 24;

Step 26 - NC = NCP - 500: counter presetting to the total sample number still to be considered;

Step 27 - digital filter 5 calculation for NC sample

CMP = value pointed by POINT

SUM = AH*CMP + AK*TAU

TAU = SUM

POINT = POINT + 1

NC = NC - 1

Steps 28, 29, 30, 31, 32, 33, 34, 35 - Muliple threshold comparator 6 (4 thresholds with 3 dB spacing from one another). Compared with TAU are four values A*CMP, B*CMP, C*CMP and D*CMP corresponding to four levels spaced from one another by 3 dB (due to the weighing coefficients A, B, C and D). If each threshold is exceeded, the variable $L_\varphi$ is increased (in 29, 31, 33 or 35). The steps 28, 30, 32 and 34 perform a test of the conditions A*CMP TAU, B*CMP > TAU, C*CMP > TAU, D*CMP > TAU;

Step 36 - $L_E$ = $L_E$ + CMP. The variable $L_E$ is increased by the value of the considered sample;

Step 37 - test of the condition NC = 0. If the condition is true, the program continues to step 38, otherwise the loop is repeated for the following sample coming back to step 27;

Step 38 - calculation of the final values $L_E$ and $L_\varphi$.

As for $L_E$ the value accumulated in the variable $L_E$ is divided by the sample number (average value). As for $L_\varphi$ the value accumulated in the variable $L_\varphi$ is divided by the scale factor SCAL;

6

$L_E = L_E / (NCP - 500)$
$L_\varphi = L_\varphi / SCAL$

Step 39 - the final value of $L_E$ and $L_\varphi$ are shown on the display 9 of the microprocessor system;

Step 40 - end of data processing.

**Claims**

1. Method for the measurement of an evaluation index of the noise or nuisance level of the noise ($L_{DI}$) bound to two physical parameters of the noise, namely the parameter indicating the average energy level of the noise ($L_E$) and the parameter indicating the fluctuation level of the noise ($L_\varphi$), both parameters being evaluated in a time T, characterized in that said nuisance level ($L_{DI}$) is defined by the expressions:

$$L_{DI} = L_E + L_\varphi \tag{1}$$

$$L_E = 10 \lg_{10} \frac{1}{T} \int_0^T 10^{L(t)/10} dt \tag{2}$$

$$L_\varphi = K \frac{\tau}{T} \sum_{x=0}^{x_T} \frac{f(x)}{n} \tag{3}$$

where K is a constant which can be determined by correlating physical data of the noise with subjective evaluation tests of the nuisance; T is the sound measuring time in seconds; $\tau$ is a constant provisionally fixed equal to unit; f(x) is a function evaluating the positive noise fluctuations by means of the time functions $L_p(t)$ and $L(t)$ which are the noise levels corresponding to a short time constant (noise fluctuation) and a longer time constant (average noise level), respectively; and n is a whole number bound to the minimum dB-range of the noise fluctuation one wants to detect.

2. Apparatus for the measurement of the nuisance index ($L_{DI}$) defined in claim 1, characterized in that it is comprised of a microphone (M) supplying the signal to a pre-amplifier (1) which applies this signal to a RMS-detector (2) having a short time constant and driving a 8-bit analogical-to-digital converter (3) associated to a timer (4), the signal of detector (3) being simultaneously fed to a digital filter (5) acting as a RC-circuit having a long time constant and to one input of a multiple threshold comparator (6), the output signal of filter (5) being applied both to an integrator (7) supplying the parameter ($L_E$) trasferred to display (9) and to the other input of comparator (6) supplying an output signal to a set of accumulator-counter registers (8) associated to a timer (10) and providing for the calculation of the parameter ($L_\varphi$) and the supplying thereof to display (9).

3. Apparatus according to claim 2, wherein block (2) is comprised of a root mean square detector including an integrated circuit AD 536 connected to a comparator formed of a potentiometer, a divider made of resistance and an input trimming resistance, a set of variable capacitors ($C_1$) for setting short time constants being provided in the same circuit along with a set of capacitors ($C_2$) which can be matched to the value preset in the capacitor set ($C_1$).

FIG.1

FIG.2

FIG.3

EP 0 322 375 A2

FIG.4

FIG.6

FIG.5